# EUROPEAN PATENT SPECIFICATION

(11) **EP 3 878 705 B1**
(45) Date of publication and mention of the grant of the patent: **03.05.2023**
(21) Application number: 18939128.7
(22) Date of filing: 08.11.2018
(51) Int. Cl.: B60W 10/06, B60K 6/46, B60W 20/00, F01N 3/021, F02D 45/00, B60W 10/08, B60W 10/26, B60W 20/16

(54) **CONTROL METHOD FOR HYBRID VEHICLE AND CONTROL DEVICE FOR HYBRID VEHICLE**
STEUERUNGSVERFAHREN FÜR EIN HYBRIDFAHRZEUG UND STEUERUNGSVORRICHTUNG FÜR EIN HYBRIDFAHRZEUG
PROCÉDÉ DE COMMANDE POUR VÉHICULE HYBRIDE ET DISPOSITIF DE COMMANDE POUR VÉHICULE HYBRIDE

(43) Date of publication of application: 15.09.2021
(73) Proprietor: NISSAN MOTOR CO., LTD., Yokohama-shi, Kanagawa 221-0023 (JP)
(72) Inventor: TSUYUKI, Takeshi, Atsugi-shi, Kanagawa 243-0123 (JP)
(74) Representative: Hoefer & Partner Patentanwälte mbB
(86) International application number: PCT/JP2018/041521
(87) International publication number: WO 2020/095416

(56) References cited:
- DE-A1- 4 321 767
- DE-A1-102014 220 860
- JP-A- 2002 285 823
- JP-A- 2007 055 348
- JP-A- 2010 001 860
- JP-A- 2010 242 639
- JP-A- 2011 085 092
- JP-A- 2014 227 009
- JP-A- 2015 140 150
- JP-A- 2017 136 935
- JP-A- 2018 134 988
- US-A1- 2018 216 552

## Description

### TECHNICAL FIELD

The present invention relates to a control of a hybrid vehicle.

### BACKGROUND OF THE INVENTION

JP2015-202832A and JP2018-83570A disclose a hybrid vehicle including a filter for collecting particulate matter, i.e. PM, in exhaust gas of an engine.

DE 10 2014 220860 A1 discloses a method for operating a hybrid vehicle with an internal combustion engine and an electric machine for driving the hybrid vehicle, an electrical energy store and an exhaust gas cleaning system for collecting exhaust gas particles from exhaust gas from the internal combustion engine. The method comprises the following steps: determining a current amount of exhaust gas particles stored in the exhaust gas purification system; determining a charging strategy of the electrical energy store for a hybrid operating state of the hybrid vehicle as a function of the determined current quantity of exhaust gas particles, the charging strategy having a target state of charge for the electrical energy store; and executing, during the hybrid operating state of the hybrid vehicle, a cleaning process of the exhaust gas cleaning system if the determined current quantity of exhaust gas particles exceeds a maximum value.

JP 2007 055348 A discloses a controller for a hybrid vehicle. The controller for the hybrid vehicle provided with an engine with an exhaust emission control device installed in an exhaust passage, a generator for generating electric power by an output from the engine, a charge accumulating means for accumulating the electric power generated by the generator, and an electric motor driven by the electric power, and traveling by outputs from the engine and the electric motor, or the output from the electric motor, requests temperature rise for the exhaust emission control device, detects a charge accumulation state in the charge accumulating means, sets a target engine output required for increasing temperature of the exhaust emission control device to a prescribed temperature, when the temperature rise is requested, computes a temperature rise required time for the exhaust emission control device, computes a power generation amount generated by the target engine output, and corrects the target engine output not to be overcharged, based on the current charge accumulating state in the charge accumulating means and the power generation amount.

US 2018/216552 A1 discloses a hybrid vehicle provided with a control device configured to permit fuel cutoff of the engine when the SOC of the power storage device is greater than a first predetermined ratio, an amount of particulate matter deposited on the filter is less than a first predetermined amount, or a temperature of the filter is lower than a predetermined temperature. The control device is configured to set the allowable upper-limit ratio of the SOC: to a second predetermined ratio greater than the first predetermined ratio when the PM amount is less than a second predetermined amount less than the first predetermined amount, and to a third predetermined ratio equal to or less than the first predetermined ratio when the PM amount is equal to or greater than the second predetermined amount.

JP 2017 136935 A discloses a hybrid vehicle that includes: a hybrid system which has an engine and a motor generator; a filter for exhaust emission control which is arranged in an exhaust passage of the engine; and a control device. In the hybrid vehicle, the control device is configured to execute control processing for stopping fuel injection of the engine and rotating an output shaft of the engine by the motor generator when the temperature of the filter is a reference temperature set in advance or more.

### SUMMARY OF THE INVENTION

Some hybrid vehicles have a series hybrid mode in which a power-generation motor generator is driven by an engine to generate electric power, and a travel motor generator is driven by the electric power generated by the power-generation motor generator. In such vehicles, for example, by performing motoring of the engine by the power-generation motor generator and feeding air into a high-temperature filter, it is possible to refresh the filter by combusting the PM deposited on the filter.

However, depending on loaded amount of the PM and temperature of the filter when combusting the PM, the filter may be excessively heated by the combustion of the PM. As a result, the filter may be deteriorated.

The present invention has been made in view of such a problem, and an object thereof is to suppress deterioration of a filter due to an excessive temperature increase in a hybrid vehicle having a series hybrid mode.

### SOLUTION TO PROBLEM

The present invention is defined by a control method of a hybrid vehicle with the subject matter of the independent claim 1 and by a control device of a hybrid vehicle with the subject matter of independent claim 7. The dependent claims contain advantageous embodiments of the invention. The control method of a hybrid vehicle is a control method of the hybrid vehicle provided with an engine, a power-generation motor generator, and a travel motor generator. The hybrid vehicle has a series hybrid mode in which the power-generation motor generator is driven by the engine to generate electric power and the travel motor generator is driven by the electric power generated by the power-generation motor generator. The hybrid vehicle has a filter configured to collect a particulate matter in exhaust gas from the engine. The control method includes performing an operation limitation of the engine on the basis of a loaded amount of the particulate matter in the filter.

The control device of the hybrid vehicle corresponds to the control method of the hybrid vehicle.

### BRIEF DESCRIPTION OF THE DRAWINGS

FIG. 1 is a schematic configuration diagram of a hybrid vehicle.
FIG. 2 is a schematic configuration diagram of an exhaust system of an engine.
FIG. 3 is a diagram illustrating a relationship between a PM loaded amount and an allowable GPF temperature.
FIG. 4 is an explanatory diagram of an operation limitation of the engine.
FIG. 5 is a first explanatory diagram of the operation limitation method of the engine.
FIG. 6 is a second explanatory diagram of the operation limitation method of the engine.
FIG. 7 is a diagram showing an example of a control of a first embodiment in a flowchart.
FIG.8 is a diagram showing an example of a timing chart of the first embodiment.
FIG. 9 is a diagram illustrating an operation mode of the engine.
FIG. 10 is a diagram showing an example of control of a second embodiment in a flowchart.
FIG. 11 is a diagram showing an example of a timing chart of the second embodiment.

### DETAILED DESCRIPTION OF THE EMBODIMENTS

Embodiments of the present invention will be described below with reference to the accompanying drawings.

### (First Embodiment)

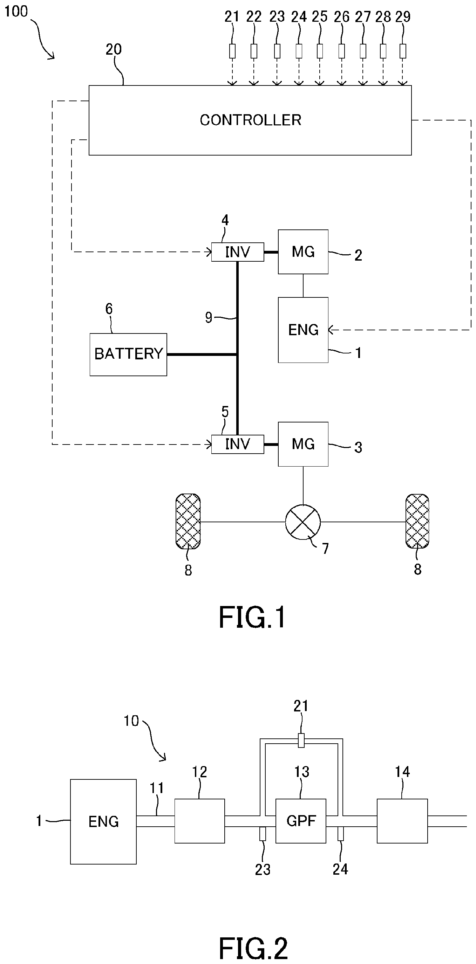

FIG. 1 is a schematic configuration diagram of a hybrid vehicle 100. FIG. 2 is a schematic configuration diagram of an exhaust system 10 of an engine 1. As shown in FIG. 1, the hybrid vehicle 100 is provided with the engine 1, a power-generation motor generator 2, a travel motor generator 3, a first inverter 4, a second inverter 5, a battery 6, a differential mechanism 7, drive wheels 8, and a controller 20. In the following, the hybrid vehicle 100 is referred to as the vehicle 100, and the motor generator is referred to as an MG.

The engine 1 is a gasoline engine and is connected to the power-generation MG 2. The power-generation MG 2 is driven by the engine 1 to generate electricity. The travel MG 3 is connected to the drive wheels 8 via the differential mechanism 7. The travel MG 3 drives the vehicle 100 and regenerates energy during deceleration.

The power-generation MG 2 and the travel MG 3 form a high-voltage voltage circuit 9 together with the first inverter 4, the second inverter 5, the battery 6, and so forth. The first inverter 4 is used to control the power-generation MG 2, and the second inverter 5 is used to control the travel MG 3. Each of the first inverter 4 and the second inverter 5 generates a three-phase AC on the basis of a command from the controller 20, and applies the generated three-phase AC to the corresponding MG of the power-generation MG 2 and the travel MG 3. The first inverter 4 and the second inverter 5 may be integrated. The battery 6 constitutes a power source for the power-generation MG 2 and the travel MG 3. The battery 6 is charged by electric power supplied from the travel MG 3 during the regeneration. The battery 6 may be charged by electric power supplied from the power-generation MG 2.

As shown in FIG. 2, the exhaust system 10 is provided with an exhaust passage 11, a catalyst converter 12, a gasoline particulate filter (hereinafter, referred to as GPF) 13, and a muffler 14. The exhaust passage 11 allows the exhaust gas from the engine 1 to flow therethrough. The catalyst converter 12 is provided immediately after the engine 1 and cleans the exhaust gas by oxidizing uncombusted components such as HC, CO, and so forth contained in the exhaust gas and by reducing oxidized components such as NOx contained in the exhaust gas. The GPF13 is provided downstream of the catalyst converter 12 and collects particulate matters, i.e. the PM, in the exhaust gas from the engine 1. The GPF13 may further includes a catalyst. The muffler 14 is provided downstream of the GPF13 to reduce the exhaust noise.

On the exhaust passage 11, a differential pressure sensor 21 for detecting a differential pressure between inlet exhaust pressure Pin of the GPF13 and outlet exhaust pressure Pout of the GPF13 is provided. A PM loaded amount S in the GPF13 can be estimated on the basis of the differential pressure between the inlet exhaust pressure Pin and the outlet exhaust pressure Pout of the GPF13.

Further, at a portion connected to an inlet of the GPF13, the exhaust passage 11 is provided with an exhaust-gas temperature sensor 23 for detecting exhaust-gas temperature Tex, and at a portion connected to an outlet of the GPF13, the exhaust passage 11 is provided with a GPF temperature sensor 24 for detecting GPF temperature T which is bed temperature of the GPF13. The GPF temperature T can be detected as a real temperature of the temperature of the GPF13 on the basis of an output-signal from the GPF temperature sensor 24.

Referring back to FIG. 1, the controller 20 comprises one or more microcomputers having a central processing unit (CPU), a read-only memory (ROM), a random access memory (RAM), and an input/output interface (an I/O interface). The controller 20 integrally controls the engine 1, the first inverter 4, the second inverter 5, and the like by executing a program stored in the ROM or the RAM by the CPU.

Signals are input to the controller 20 from various sensor switches, such as, in addition to the first pressure sensor 21, the second pressure sensor 22, the exhaust-gas temperature sensor 23, and the GPF temperature sensor 24, a vehicle speed sensor 25 for detecting the vehicle speed VSP, an accelerator position sensor 26 for detecting an accelerator position (an accelerator opening degree) APO, a brake sensor 27 for detecting a brake pedal effort BPF, a revolution speed sensor 28 for detecting the revolution speed Ne of the engine 1, a SOC sensor 29 for detecting a battery state of charge SOC indicative of a charged state of the battery 6, and so forth. These signals are used for a control performed by the controller 20.

As a travelling mode of the vehicle 100, the controller 20 has an EV mode and a series hybrid mode (hereinafter, referred to as the series HEV mode). The EV mode is a mode in which the travel MG 3 is driven by the electric power supplied from the battery 6 and the vehicle 100 travels by the driving force only from the travel MG 3. The series HEV mode is a mode in which the power-generation MG 2 is driven by the engine 1 to generate the electric power, and the travel MG 3 is driven by the electric power generated by the power-generation MG 2.

The controller 20 selects the traveling mode by referring to a traveling mode selection map not shown on the basis of the accelerator position APO, the brake pedal effort BPF, and the vehicle speed VSP, and drives the engine 1 and the travel MG 3 so that the selected traveling mode is realized.

In the vehicle 100, by performing motoring of the engine 1 by the power-generation MG 2 and feeding air into the high-temperature GPF13, it is possible to refresh the GPF13 by combusting the PM that has been deposited on the GPF13.

However, depending on the PM loaded amount S and the GPF temperature T in the GPF13 at the time of the motoring of the engine 1, the GPF13 may be excessively heated by the combustion of the PM, resulting in deterioration of the GPF13. As the GPF13 is deteriorated, there is concern that a collecting function and a catalytic function of the GPF13 are lowered.

In view of such circumstances, in the present embodiment, the deterioration of the GPF13 is suppressed as described below.

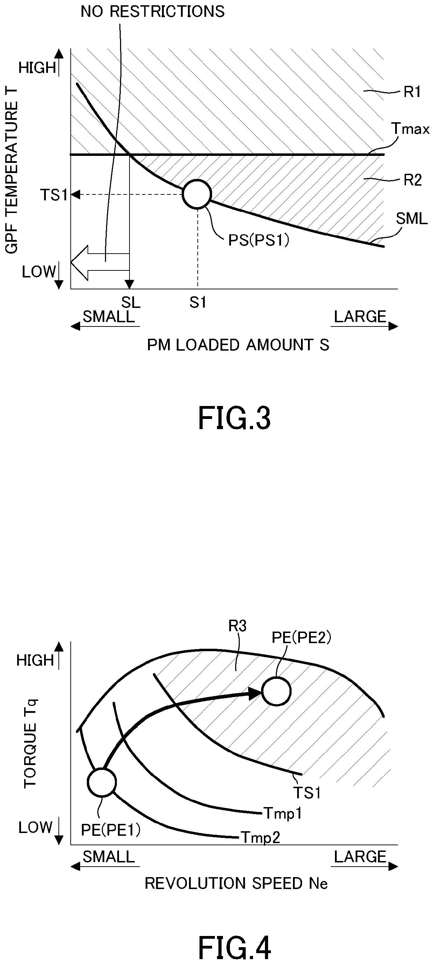

FIG. 3 is a diagram for explaining the relationship between the PM loaded amount S and allowable GPF temperature TS.

A line SML indicates the allowable GPF temperature TS according to the PM loaded amount S. In other words, the line SML indicates the relationship between the PM loaded amount S and the allowable GPF temperature TS. The allowable GPF temperature TS is an upper limit value of the GPF temperature T in response to the motoring of the engine 1, and is set according to the PM loaded amount S as the upper limit value of the GPF temperature T at which the temperature of the GPF13 is not excessively increased due to the combustion of the PM in response to the motoring of the engine 1. As can be seen from the line SML, the allowable GPF temperature TS decreases as the PM loaded amount S increases.

A maximum GPF temperature Tmax is the GPF temperature T when the exhaust-gas temperature Tex of the engine 1 is the maximum temperature, and the GPF temperature T normally does not exceed this maximum GPF temperature Tmax. Therefore, a state point PS determined by the PM loaded amount S and the GPF temperature T is not included in a region R1 located at a higher temperature side of the maximum GPF temperature Tmax.

In the case where the GPF temperature T exceeds the allowable GPF temperature TS, the GPF13 may be excessively heated due to the combustion of the PM deposited on the GPF13 during the motoring of the engine 1, resulting in the deterioration of the engine the GPF13. For this reason, the region R2, which is a region on the higher temperature side of the line SML that does not overlap with the region R1, is an avoidance region in which the entry of the state point PS is to be avoided.

A first predetermined amount SL is the PM loaded amount S corresponding to the case where the GPF temperature T is equal to the highest GPF temperature Tmax on the line SML. In other words, the first predetermined amount SL is the PM loaded amount S when the allowable GPF temperature TS is equal to the highest GPF temperature Tmax, and thus, when the allowable GPF temperature TS is equal to a temperature corresponding to the highest temperature of the exhaust-gas temperature Tex of the engine 1.

If the PM loaded amount S is equal to or smaller than the first predetermined amount SL, the GPF temperature T will not exceed the allowable GPF temperature TS. Therefore, when the PM loaded amount S is equal to or smaller than the first predetermined amount SL, it is unnecessary to perform an operation limitation of the engine 1.

As can be seen from the state point PS1, in the case where the PM loaded amount S is the loaded amount S1, an allowable GPF temperature TS1, which is the allowable GPF temperature TS corresponding to the loaded amount S1, is determined on the basis of the line SML. In this case, when the GPF temperature T exceeds the allowable GPF temperature TS1, the state point PS enters the region R2, and then it becomes a state in which there is concern that the GPF13 may be deteriorated due to the excessive temperature increase at the time of the motoring. Therefore, in the present embodiment, the operation limitation of the engine 1 is performed as described below.

FIG. 4 is an explanatory diagram for the operation limitation of the engine 1. FIG. 4 shows an isotherm of the allowable GPF temperature TS1, an isotherm of a temperature Tmp1 lower than the allowable GPF temperature TS1, and an isotherm of a temperature Tmp2 lower than the temperature Tmp1 in the operating region in accordance with the revolution speed Ne and the torque Tq of the engine 1.

FIG. 4 shows a case where an operating point PE of the engine 1 is shifted from an operating point PE 1 to an operating point PE2 when the power generation operation in which the power generation is performed by driving the power-generation MG 2 by the engine 1 is started at the operating point PE1. The operating point PE 1 is the operating point PE when the PM loaded amount S is the loaded amount S1 and the GPF temperature T is equal to the temperature Tmp2, and the operating point PE2 is the operating point PE within a region R3 which is on the higher temperature side of the isotherm of the allowable GPF temperature TS1.

Therefore, in such a case, when the motoring is performed, the PM deposited on the GPF13 is combusted rapidly at a high temperature exceeding the allowable GPF temperature TS1, and the excessive temperature increase exceeding 1000 °C, for example, occurs in the GPF13, which may result in the deterioration of the GPF13.

Therefore, in the present embodiment, when the operating point PE in accordance with the revolution speed Ne and the torque Tq is shifted to the operating point PE2, the operating region of the engine 1 is limited to the operating region of the lower temperature side of the region R3. As a result, the operation limitation of the engine 1 is performed so that the operating point PE lies outside the region R3. By performing the operation limitation of the engine 1 in this manner, the operation limitation of the engine 1 is performed on the basis of the allowable GPF temperature TS according to the PM loaded amount S.

Specifically, the operation limitation of the engine 1 can be performed as follows.

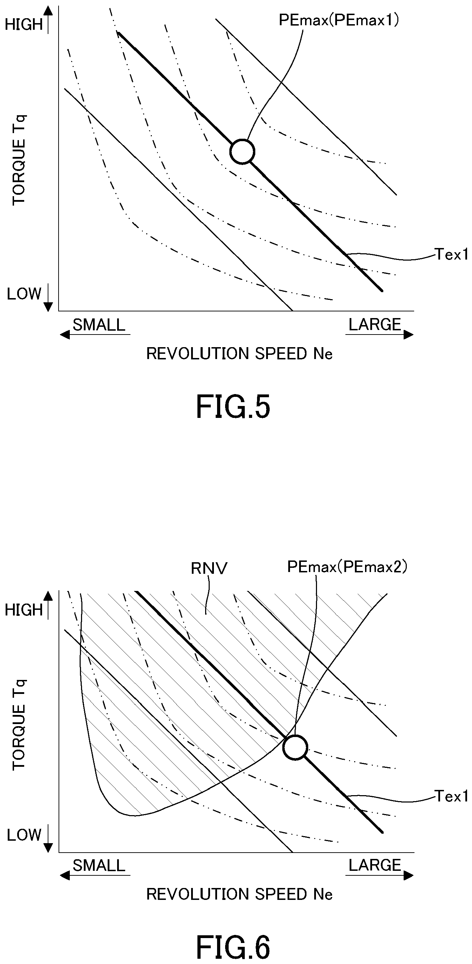

FIG. 5 is a first explanatory diagram for an operation limitation method of the engine 1. The exhaust-gas temperature Text indicates the exhaust-gas temperature Tex corresponding to the allowable GPF temperature TS1, and the two-dot broken line indicates the equal output line of the engine 1. FIG. 5 shows a case in which sound and vibration performance of the engine 1 is not considered. The higher the revolution speed Ne and the torque Tq, i.e., toward the upper right in FIG. 5, the higher the exhaust-gas temperature Tex and the output of the engine 1.

Upon operating the engine 1 while performing the operation limitation, it is desirable that the GPF temperature T becomes equal to or lower than the allowable GPF temperature TS1. Therefore, the exhaust-gas temperature Tex needs to be suppressed to the exhaust-gas temperature Text at the highest. On the other hand, upon operating the engine 1, it is desirable to achieve as high efficiency as possible.

As described above, by setting an upper limit operating point PEmax of the engine 1 at a position where the output is the highest on the isotherm of the exhaust-gas temperature Text, and by operating the engine 1 at the revolution speed Ne and the torque Tq at or below the upper limit operating point PEmax, the engine 1 can be efficiently operated while performing the operation limitation. An upper limit operating point PEmax 1 is the upper limit operating point PEmax set in this manner, and it can be set in advance. When considering the sound and vibration performance of the engine 1, the upper limit operating point PEmax can be set as follows.

FIG. 6 is a second explanatory diagram for the operation limitation method of the engine 1. A region RNV indicates a region where the sound and vibration performance of the engine 1 does not meet the criteria. In this case, the upper limit operating point PEmax needs to be set by avoiding the region RNV. Therefore, the upper limit operating point PEmax is set at a position where the output is the highest on the isotherm of the exhaust-gas temperature Text at outside the region RNV. An upper limit operating point PEmax2 is the upper limit operating point PEmax set in this manner, and can be set in advance. In such cases, even when the engine 1 is operated at the revolution speed Ne and the torque Tq at or below the upper limit operating point PEmax2, the operation of the engine 1 is performed by avoiding the region RNV.

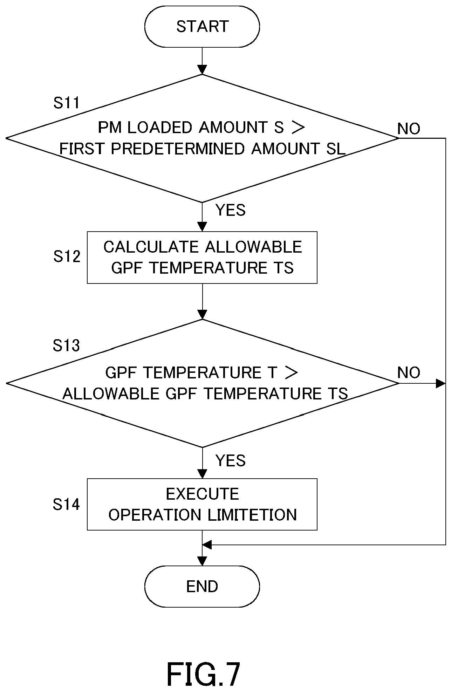

FIG. 7 is a diagram showing an example of a control performed by the controller 20 in a flowchart. At step S11, the controller 20 determines whether or not the PM loaded amount S is greater than the first predetermined amount SL. If a negative determination is made in step S 11, the processing is finished once. In other words, when the PM loaded amount S is equal to or smaller than the first predetermined amount SL, the controller 20 does not perform the operation limitation of the engine 1, which is performed in step S14 described later. If an affirmative determination is made in step S11, the processing proceeds to step S12.

In step S12, the controller 20 calculates the allowable GPF temperature TS. The allowable GPF temperature TS can be calculated by obtaining the allowable GPF temperature TS corresponding to the current PM loaded amount S from the line SML.

At step S13, the controller 20 determines whether or not the GPF temperature T is higher than the allowable GPF temperature TS. If the GPF temperature T is equal to or lower than the allowable GPF temperature TS, the deterioration of the GPF13 due to the excessive temperature increase will not be caused during the motoring of the engine 1. Therefore, if a negative determination is made in step S13, the processing is finished once.

When the GPF temperature T is higher than the allowable GPF temperature TS, there is concern that the GPF13 may be deteriorated due to an excessive temperature increase during the motoring of the engine 1. Therefore, if an affirmative determination is made in step S13, the processing proceeds to step S14, and the controller 20 executes the operation limitation of the engine 1. The operation limitation of the engine 1 is performed by limiting the operating region of the engine 1.

By performing the operation limitation of the engine 1, as compared with the case where the operation limitation is not performed, the exhaust-gas temperature Tex is suppressed to suppress the GPF temperature T, and therefore, the excessive increase in the temperature of the GPF13 and the deterioration of the GPF13 are suppressed during the motoring of the engine 1. After step S14, the processing is finished once.

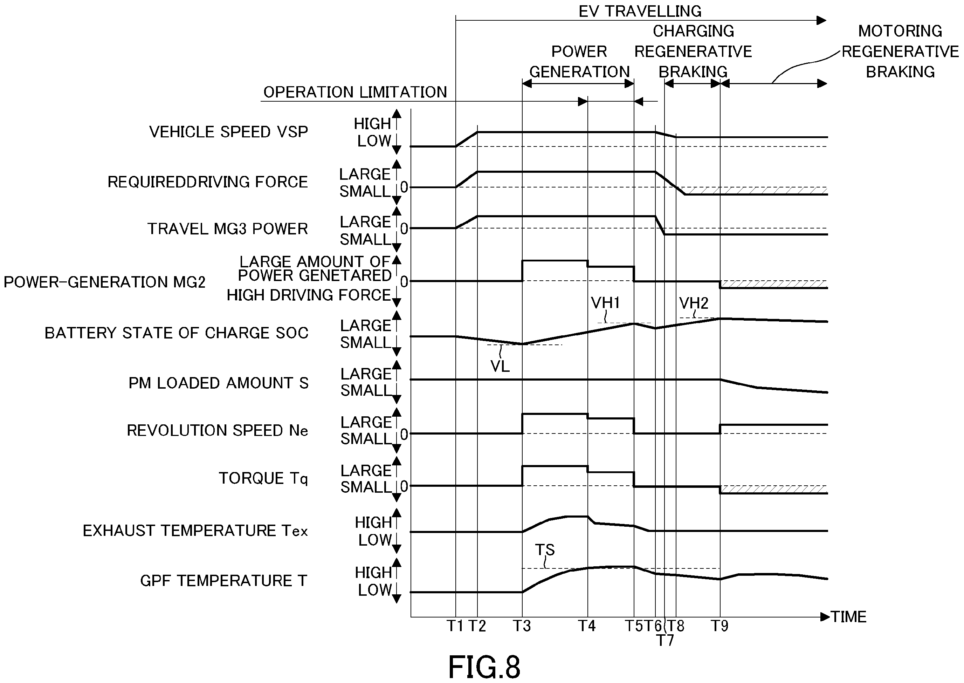

FIG. 8 is a diagram showing an example of a timing chart corresponding to the flowchart shown in FIG. 7. At timing T1, the required driving force begins to increase, and the EV travelling by the EV mode is started. Therefore, the vehicle speeds VSP and the outputs of the travel MG 3 begin to increase, and the battery state of charge SOC begins to decrease. At timing T2, the required driving force becomes constant, and the vehicle speed VSP and the output of the travel MG 3 become constant.

At timing T3, the battery state of charge SOC becomes the charge lower limit value VL of the battery 6. Therefore, as the power generation operation of the engine 1 is started and as the revolution speed Ne and the torque Tq increase, an amount of the power generated by the power-generation MG 2 is increased. At timing T3, the exhaust-gas temperature Tex and the exhaust-gas temperature GPF temperature T also begin to increase.

At timing T4, the GPF temperature T exceeds the allowable GPF temperature TS. Therefore, the operation limitation of the engine 1 is executed, the revolution speed Ne and the torque Tq are lowered, and the amount of the power generated by the power-generation MG 2 is lowered.

At timing T5, the battery state of charge SOC becomes a first charge upper limit value VH1 of the battery 6, and the power generation operation by the engine 1 is stopped. The first charge upper limit value VH1 is the charge upper limit value of the battery 6 when a charging regenerative braking described later is not performed. At timing T5, the revolution speed Ne, the torque Tq, and the amount of the power generated by the power-generation MG 2 becomes zero in response to the halt of the power generation operation, and then, the battery state of charge SOC begins to drop. At the timing T5, because the power generation operation of the engine 1 is stopped, the operation limitation of the engine 1 is also not performed.

At timing T6, the vehicle 100 begins to decelerate, and as the required driving force begins to decrease, the vehicle speed VSP and the power of the travel MG 3 begin to decrease. At timing T6, the regeneration of the travel MG 3 is started, and as a result, the battery state of charge SOC begins to increase.

At timing T7, the charging regenerative braking, in which the battery 6 is charged with the regenerated electric power while performing the regenerative braking by the travel MG 3, is started. The charging regenerative braking is initiated as follows. That is, the required driving force is gradually decreased first in response to the start of deceleration of the vehicle 100. When the output of the travel MG 3 is gradually reduced to a preset negative regenerative braking time output in response thereto, the charging regenerative braking is started. The charging regenerative braking is performed for the following reason.

That is, the vehicle 100 having the series HEV mode does not generate engine braking. Therefore, in order to generate a negative output or braking force equivalent to the engine braking in the travel MG 3, the charging regenerative braking, in which the regenerative braking is performed by the travel MG 3 and the battery 6 is charged with thus regenerated electric power at the same time, is performed.

At timing T8, the required driving force becomes zero, and thereafter, the required driving force becomes the preset driving force at the time of regenerative braking. From the timing T8, the required driving force becomes zero or smaller because the vehicle travels down on a descending slope, and since the regenerative braking is performed by the travel MG 3, the vehicle speed VSP becomes constant.

At timing T9, the battery state of charge SOC becomes a second charge upper limit value VH2 of the battery 6. The second charge upper limit value VH2 is the charge upper limit value of the battery 6 set when the charging regenerative braking is performed, and is set at the value higher than the first charge upper limit value VH1 in order to enable the battery 6 to be charged and to continue executing the charging regenerative braking.

When the battery state of charge SOC reaches the second charge upper limit value VH2 at timing T9, the battery 6 cannot be charged any more. In this case, since the execution of the charging regenerative braking cannot be continued, the braking force equivalent to the engine braking cannot be generated by the travel MG 3 by the charging regenerative braking.

For this reason, at timing T9, a motoring regenerative braking, in which the regenerative braking is performed by the travel MG 3 and the motoring of the engine 1 is performed by the power-generation MG 2 using the electric power regenerated by the travel MG 3, is started. Thus, even if the battery state of charge SOC becomes the second charge upper limit value VH2, it is possible to generate a braking force equivalent to the engine braking by the travel MG 3. As described above, the motoring of the engine 1 can be performed as the motoring regenerative braking at the time of deceleration.

At timing T9, by starting the motoring regenerative braking, the power-generation MG 2 drives the engine 1 using the electric power regenerated by the travel MG 3, and therefore, the driving force of the power-generation MG 2 is increased and the revolution speed Ne is increased. The torque Tq becomes a negative value because the engine 1 is driven by the power-generation MG 2.

At timing T9, the GPF temperature T suppressed by the operation limitation performed between timing T4 and timing T5 is lower than the allowable GPF temperature TS. Therefore, even if the motoring regenerative braking is performed, the excessive temperature increase is not caused in the GPF13.

Next, main operational advantages of the present embodiment will be described.

In the present embodiment, a control method of the vehicle 100 is realized by the controller 20. The vehicle 100 is provided with the engine 1, the power-generation MG 2, and the travel MG 3. The vehicle 100 has the series HEV mode in which the power-generation MG 2 is driven by the engine 1 to generate the electric power and the travel MG 3 is driven by the electric power generated by the power-generation MG 2. The vehicle 100 has the GPF13 configured to collect the PM in the exhaust gas from the engine 1. The control method of the vehicle 100 includes performing the operation limitation of the engine 1 on the basis of the allowable GPF temperature TS according to the PM loaded amount S in the GPF13.

According to such a method, by performing the operation limitation of the engine 1 on the basis of the allowable GPF temperature TS, it is possible to suppress the excessive temperature increase of the GPF13 when the PM is combusted by the motoring of the engine 1. Therefore, according to such a method, in the vehicle 100 having the series HEV mode, it is possible to suppress the deterioration of the GPF13 due to the excessive temperature increase, and it is possible to combust the PM without considering the GPF temperature T when the PM is combusted by the motoring.

The control method of the vehicle 100 further includes not performing the operation limitation in the case where the PM loaded amount S is equal to or smaller than the first predetermined amount SL, and the first predetermined amount SL is set to the PM loaded amount S corresponding to the case where the allowable GPF temperature TS is a temperature according to the maximum temperature of the exhaust-gas temperature Tex of the engine 1, in other words, the maximum GPF temperature Tmax in the relationship between the PM loaded amount S and the allowable GPF temperature TS.

According to such a method, the motoring control according to the PM loaded amount S can be performed without performing the operation limitation in the region where the operation limitation is not required.

### (Second Embodiment)

In the present embodiment, the controller 20 is further configured to perform a forced motoring of the engine 1 and the temperature increase control of the GPF13 described below. Except for this point, the vehicle 100 is configured in the same manner as in the first embodiment.

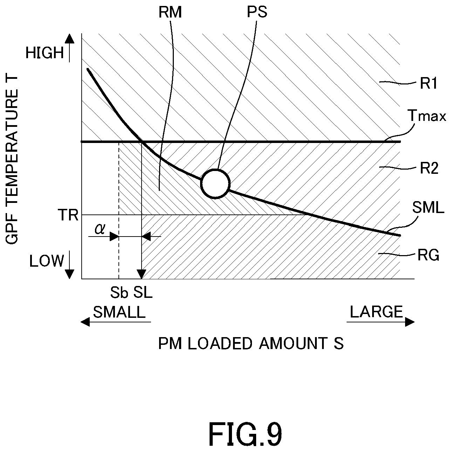

FIG. 9 is a diagram illustrating an operation mode of the engine 1 according to the PM loaded amount S and the GPF temperature T. A region RM is a region in which the forced motoring of the engine 1, which is a first operation mode, is executed. The forced motoring is the motoring executed even in the case where the charging regenerative braking can be performed, and is performed as a forced motoring regenerative braking at the time of deceleration.

The region RM is a region in which the PM loaded amount S is equal to or greater than a second predetermined amount Sb and the GPF temperature T is equal to or higher than a refreshment-allowing temperature TR of the GPF13 (e.g., 550 °C), and is the region that does not overlap with the region R1 and region R2. The second predetermined amount Sb is the PM loaded amount S corresponding to the case where the allowable GPF temperature TS is at the highest GPF temperature Tmax on the line SML, i.e., the PM loaded amount S smaller than the first predetermined amount SL. The refreshment-allowing temperature TR is set to the lower limit value of refreshment-allowing temperature of the GPF13.

As can be seen from FIG. 9, the region in which the forced motoring of the engine 1 is executed is expanded to a region in which the PM loaded amount S is smaller than the first predetermined amount SL and the operation limitation of the engine 1 is unnecessary. This increases the chances of combusting the PM by the forced motoring and reducing the PM loaded amount S, thereby making it more difficult for the state point PS to enter the region R2. As a result, a frequency at which the operation limitation of the engine 1 is executed is reduced.

The second predetermined amount Sb is set to the PM loaded amount S smaller than the first predetermined amount SL by a predetermined value α. If the predetermined value α is too large, the PM loaded amount S is reduced by the forced motoring even if the PM loaded amount S is small, and the reduction efficiency of the PM loaded amount S by the forced motoring is lowered. If the predetermined value α is too small, the forced motoring cannot sufficiently reduce the PM loaded amount S, and the frequency at which the operation limitation of the engine 1 is executed cannot be sufficiently reduced. For this reason, the predetermined value α is set in advance from the viewpoint of the efficiency for reducing the PM loaded amount S by the forced motoring and the frequency at which the operation limitation of the engine 1 is executed.

The region RG is a region in which the temperature increase control of the GPF13, which is a second operation mode, is executed. The temperature increase control of the GPF13 is performed by shifting the operating point PE of the engine 1 during the power generation operation to the operating point PE at which the exhaust-gas temperature Tex increases. Therefore, the temperature increase control of the GPF13 can be performed by controlling at least one of a fuel injection amount, an ignition timing, and an intake air amount of the engine 1 so that at least one of the revolution speed Ne and the torque Tq of the engine 1 during the power generation is increased.

The region RG is a region in which the PM loaded amount S is equal to or greater than the first predetermined amount SL and the GPF temperature T is lower than the refreshment-allowing temperature TR, and is a region that does not overlap with the region R2. Since the region RG is a region lower than the refreshment-allowing temperature TR, the PM deposited on the GPF13 cannot be combusted even if the motoring of the engine 1 is executed. For this reason, in the region RG, by executing the temperature increase control of the GPF13, the high-temperature exhaust gas is made to flow through the GPF13, thereby raising the temperature of the GPF13.

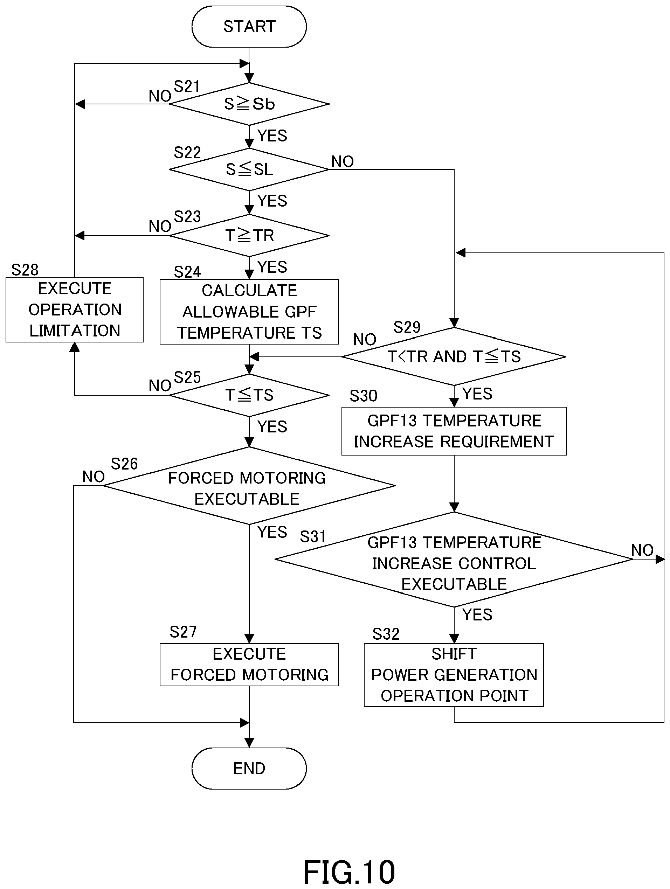

FIG. 10 is a diagram showing an example of a control performed by the controller 20 in the second embodiment in a flowchart. The controller 20 determines whether or not the PM loaded amount S is equal to or greater than the second predetermined amount Sb in step S21, whether or not the PM loaded amount S is equal to or smaller than the first predetermined amount SL in step S22, and whether or not the GPF temperature T is equal to or higher than the refreshment-allowing temperature TR in step S23. From step S21 to step S23, it is determined whether or not the state point PS is in the region R1 or in a region where the operation limitation of the engine 1 is not necessary in the region RM that is the region in which the forced motoring is to be executed.

If a negative determination is made in step S21 or step S23, the state point PS is located in a region in which the operation mode of the engine 1 is not specifically set. In this case, the processing returns to step S21. If an affirmative determination is made in steps from step S21 to step S23, the processing proceeds to step S24.

In step S24, the controller 20 calculates the allowable GPF temperature TS. Further, in step S25, the controller 20 determines whether or not the GPF temperature T is equal to or lower than the allowable GPF temperature TS. In the case where an affirmative determination is made in steps from step S21 to step S23, the state point PS is located in the region that does not require the operation limitation. Therefore, the GPF temperature T does not exceed the allowable GPF temperature TS. Because of this, in this case, an affirmative determination is made in step S25, and the processing proceeds to step S26.

In step S26, the controller 20 determines whether or not the forced motoring is executable. Such a determination may be made by determining whether or not a permission requirements for the forced motoring have been met. The permission requirements for the forced motoring include that the engine 1 is not performing the power generation operation and that the battery state of charge SOC is equal to or greater than a predetermined state SOC1. The predetermined state SOC1 is the battery state of charge SOC required to execute the motoring, and it can be set in advance. If an affirmative determination is made in step S26, the processing proceeds to step S27.

In step S27, the controller 20 executes the forced motoring. By doing so, the PM deposited on the GPF13 is combusted and the PM loaded amount S reduces. After step S27, the processing is finished once. If a negative determination is made in step S26, the processing is also finished once.

If a negative determination is made in step S22, in other words, if the PM loaded amount S is greater than the first predetermined amount SL, the processing proceeds to step S29, and the controller 20 determines whether or not the GPF temperature T is lower than the refreshment-allowing temperature TR and the GPF temperature T is equal to or lower than the allowable GPF temperature TS. If an affirmative determination is made in step S29, the processing proceeds to step S30.

In step S30, the controller 20 requests temperature increase in the GPF13. The request for the temperature increase in the GPF13 is a request to execute the temperature increase control of the GPF13 and is performed by, for example, turning on a flag.

In step S31, the controller 20 determines whether or not the temperature increase control of the GPF13 is executable. Such a determination can be made by determining whether or not the engine 1 is in the power generating operation. If a negative determination is made in step S31, the processing returns to step S29. In this case, the battery state of charge SOC becomes the charge lower limit value VL of the battery 6, and the processing from step S29 to step S31 is then repeated until the power generation operation of the engine 1 is started. If the determination in step S31 is affirmative, the processing proceeds to step S32.

In step S32, the controller 20 shifts a power generation operating point, that is, the operating point PE of the engine 1 during the power generation operation to the operating point PE at which the exhaust-gas temperature Tex increases. As a result, the temperature increase in the GPF13 is made realized. After step S32, the processing returns to step S29.

When the temperature of the GPF13 is increased and the GPF temperature T becomes equal to or higher than the refreshment-allowing temperature TR, the PM deposited on the GPF13 can be combusted by the forced motoring. Therefore, if a negative determination is made in step S29, the processing proceeds to step S25 described above, and if an affirmative determination is made in step S25 and step S26, the forced motoring is executed.

If the processing proceeds to step S25 through the negative determination in the step S29, the GPF temperature T may become higher than the allowable GPF temperature TS due to the shift of the power generation operating point. In such cases, a negative determination is made in step S25, and the processing proceeds to step S28.

In step S28, the controller 20 executes the operation limitation of the engine 1. As a result, the exhaust-gas temperature Tex is suppressed to suppress the GPF temperature T, and so, the GPF13 is prevented from being deteriorated due to the excessive temperature increase during the motoring. After step S28, the processing returns to step S21.

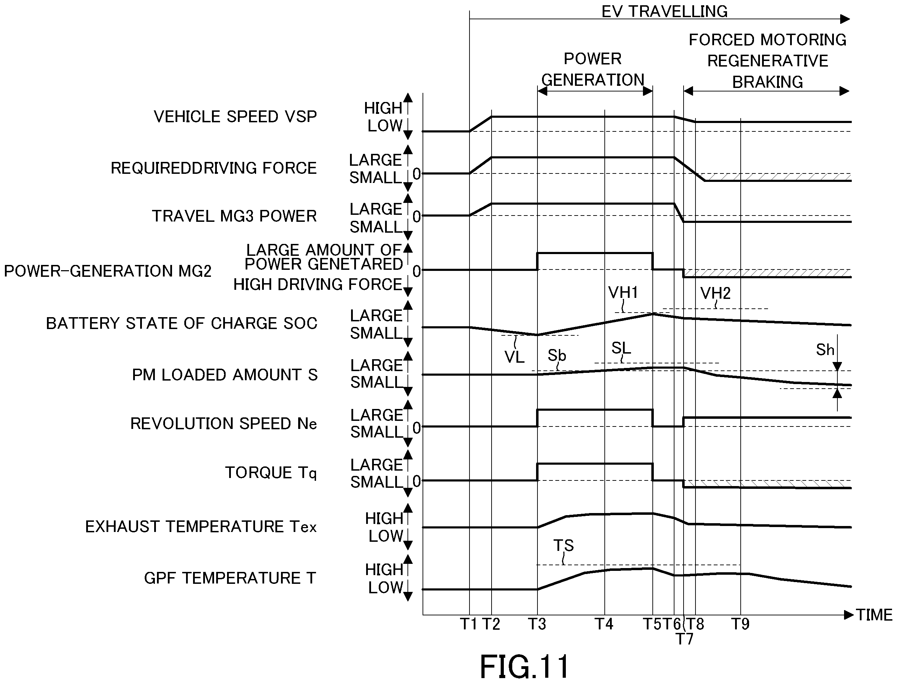

FIG. 11 is a diagram showing an example of a timing chart corresponding to the flowchart shown in FIG. 10. Hereinafter, portions different from the timing chart shown in FIG. 8 will be mainly described in detail.

The changes during the period from the timing T1 to the timing T3 are the same as that in the timing chart shown in FIG. 8 described above. That is, the EV travelling starts at timing T1, a steady travelling is achieved at timing T2, and the power generation operation of the engine 1 starts at timing T3.

In this example, the GPF temperature T is equal to or lower than the allowable GPF temperature TS at timing T4. Therefore, the operation limitation of the engine 1 is not started at the timing T4. In this case, the PM loaded amount S exceeds the second predetermined amount Sb at timing T4.

At timing T5, the power generation operation is stopped on the basis of the battery state of charge SOC. The deceleration is started at timing T6, and the output of the travel MG 3 becomes the negative regenerative braking time output at timing T7. Therefore, the charging regenerative braking can be started at timing T7.

On the other hand, in this example, the PM loaded amount S is smaller than the first predetermined amount SL and greater than the second predetermined amount Sb at timing T7, and if the PM loaded amount S exceeds the first predetermined amount SL, the case is caused where the operation limitation of the engine 1 is required.

Therefore, in this embodiment, even in the case where the charging regenerative braking can be performed at timing T7, the forced motoring regenerative braking is started, and the driving force of the power-generation MG 2 is increased for performing the forced motoring of the engine 1. As a result, the revolution speed Ne is increased, and the torque Tq becomes a negative torque. In addition, the PM loaded amount S begins to decrease. The forced motoring regenerative braking can be continued until the PM loaded amount S is reduced so as to become smaller than the second predetermined amount Sb by a preset hysteretic amount Sh.

Next, main operational advantages of the present embodiment will be described.

The control method of the vehicle 100 according to the present embodiment further includes performing the forced motoring regenerative braking, which is an example of the motoring regenerative braking in which the regenerative braking is performed by the travel MG 3 and the motoring of the engine 1 is performed by the power-generation MG 2 using the electric power regenerated by the travel MG 3 in the case where the PM loaded amount S is equal to or greater than the second predetermined amount Sb. The second predetermined amount Sb is set to the PM loaded amount S smaller than the first predetermined amount SL.

According to such a method, the PM loaded amount S can be reduced by performing the motoring regenerative braking at the second predetermined amount Sb smaller than the first predetermined amount SL. Therefore, the frequency at which the operation limitation of the engine 1 is performed due to the PM loaded amount S greater than the first predetermined amount SL can be reduced, and it is possible to reduce a situation in which the travelling performance is lowered due to the operation limitation.

The control method of the vehicle 100 according to the present embodiment further includes performing the charging regenerative braking in which the regenerative braking is performed by the travel MG 3 and the battery 6 is charged with the electric power regenerated by the travel MG3. The forced motoring regenerative braking is performed even in the case where the charging regenerative braking can be performed.

According to such a method, by forcedly performing the motoring regenerative braking from the time when the charging regenerative braking can be performed, it is possible to greatly reduce the frequency at which the operation limitation of the engine 1 is performed due to the PM loaded amount S greater than the first predetermined amount SL.

In the present embodiment, upon performing the forced motoring regenerative braking, the forced motoring regenerative braking is performed when the GPF temperature T is equal to or higher than the refreshment-allowing temperature TR.

According to such a method, since the forced motoring regenerative braking is performed in view of the GPF temperature T at which the GPF13 can be refreshed, it is possible to prevent the fuel efficiency from being affected by performing the motoring when the PM cannot be combusted.

The control method of the vehicle 100 according to the present embodiment further includes shifting the operating point PE of the engine 1 to the operating point PE at which the exhaust-gas temperature Tex increases in the case where the GPF temperature T is lower than the refreshment-allowing temperature TR.

According to such a method, it is possible to quickly increase the temperature of the GPF13 to make the GPF temperature T equal to or higher than the refreshment-allowing temperature TR, whereby it is possible to achieve, in an early stage, reduction of the PM loaded amount S due to the forced motoring regenerative braking.

In this embodiment, upon performing the forced motoring regenerative braking, the forced motoring regenerative braking is performed in the case where the battery state of charge SOC is greater than the predetermined state SOC1.

According to such a method, it is possible to prevent a situation in which the forced motoring regenerative braking cannot be executed unexpectedly due to an insufficiency in the battery state of charge SOC during the execution of the forced motoring regenerative braking.

Although the embodiments of the present invention have been described in the above, the above-mentioned embodiments merely illustrate a part of application examples of the present invention, and the technical scope of the present invention is not intended to be limited to the specific configurations of the above-described embodiments.

In the embodiments described above, although a description has been given of a case in which the operation limitation of the engine 1 is performed when the GPF temperature T is higher than the allowable GPF temperature TS. However, performing the operation limitation of the engine 1 may include, for example, performing the operation limitation when the GPF temperature T is equal to or lower than the allowable GPF temperature TS, i.e. when the state point PS is not located in the region R2.

Such the operation limitation can be realized, for example, by performing the operation limitation when the GPF temperature T is higher than a margin temperature which is lower than the allowable GPF temperature TS by a margin set in advance. The operation limitation of the engine 1 in such a manner is also included in the operation limitation of the engine 1 on the basis of the allowable GPF temperature TS according to the PM loaded amount S.

In the embodiment described above, a description has been given of a case in which the operation limitation of the engine 1 is performed on the basis of the allowable GPF temperature TS in a case where the GPF13 is refreshed by the motoring of the engine 1. Such the control is performed because, when the refreshment of the GPF13 is performed by the motoring of the engine 1, the air is flown through the GPF13 by the motoring, causing the PM deposited on the GPF13 to be combusted rapidly, and so, depending on the PM loaded amount S and the GPF temperature T, the GPF13 is likely to be overheated.

However, performing the operation limitation of the engine 1 on the basis of the allowable GPF temperature TS may be applied to a case in which refreshment of the GPF13 is performed by other methods including known methods than the motoring, such as, for example, supplying secondary air to the GPF13 to refresh the GPF13. In this case, the specific numerical value of the allowable GPF temperature TS according to the PM loaded amount S can be set to a value according to a refreshing method of the GPF13.

In the embodiments described above, a description has been given of a case in which the control method of the vehicle 100 and the control device of the vehicle 100 are realized by a single controller 20. However, the control method of the vehicle 100 and the control device of the vehicle 100 may also be realized by a plurality of controllers, for example. In addition, the control may be performed by using only a PM loaded amount of the GPF13 without using the allowable GPF temperature TS.

## Claims

1. A control method of a hybrid vehicle (100) provided with an engine (1), a power-generation motor generator (2), and a travel motor generator (3), the hybrid vehicle (100) having a series hybrid mode in which the power-generation motor generator (2) is driven by the engine (1) to generate electric power and the travel motor generator (3) is driven by the electric power generated by the power-generation motor generator (2), and the hybrid vehicle (100) having a filter (13) configured to collect a particulate matter in exhaust gas from the engine (1), the control method comprising:
shifting an operating point (PE) of the engine (1) to an operating point at which an exhaust-gas temperature (Tex) increases in a case where a loaded amount (S) of the particulate matter in the filter (13) is greater than a first predetermined amount (SL) and a temperature (T) of the filter (13) is lower than a refreshment-allowing temperature (TR) of the filter (13); and
**characterized by**:
performing a motoring of the engine (1) by the power-generation motor generator (2) in a case where the loaded amount (S) is equal to or greater than a second predetermined amount (Sb) which is a loaded amount smaller than the first predetermined amount (SL) and the temperature (T) of the filter (13) is equal to or higher than the refreshment-allowing temperature (TR) of the filter (13).

2. The control method of the hybrid vehicle (100) according to claim 1, wherein
the first predetermined amount (SL) is a loaded amount corresponding to a case where an allowable temperature (TS) of the filter (13) is a temperature (Tmax) according to a maximum exhaust-gas temperature (Tex) of the engine (1) in a relationship between the loaded amount (S) and the allowable temperature (TS) of the filter (13).

3. The control method of the hybrid vehicle (100) according to claim 1 or 2, wherein
a motoring regenerative braking in which a regenerative braking is performed by the travel motor generator (3) and a motoring of the engine (1) is performed by the power-generation motor generator (2) using the electric power regenerated by the travel motor generator (3) is performed as the motoring.

4. The control method of the hybrid vehicle (100) according to claim 3, further comprising
performing a charging regenerative braking in which the regenerative braking is performed by the travel motor generator (3) and a battery (6) is charged with the electric power regenerated by the travel motor generator (3), wherein
upon performing the motoring regenerative braking, the motoring regenerative braking is performed even in a case where the charging regenerative braking can be performed.

5. The control method of the hybrid vehicle (100) according to claim 3 or 4, wherein
upon performing the motoring regenerative braking, the motoring regenerative braking is performed in a case where, in addition, a battery state of charge (SOC) indicating a charged state of the battery (6) is greater than a predetermined state (SOC1).

6. The control method of the hybrid vehicle (100) according to any one of claims 1 to 5, wherein
an operation limitation of the engine (1) is performed based on the loaded amount (S), and
the operation limitation is not performed in a case where the loaded amount (S) is equal to or smaller than the first predetermined amount (SL).

7. A control device of a hybrid vehicle (100) provided with an engine (1), a power-generation motor generator (2), and a travel motor generator (3), the hybrid vehicle (100) having a series hybrid mode in which the power-generation motor generator (2) is driven by the engine (1) to generate electric power and the travel motor generator (3) is driven by the electric power generated by the power-generation motor generator (2), and the hybrid vehicle having a filter (13) configured to collect a particulate matter in exhaust gas from the engine (1), the control device comprising a controller (20) : configured to shift an operating point (PE) of the engine (1) to an operating point at which an exhaust-gas temperature (Tex) increases in a case where a loaded amount (S) of the particulate matter in the filter is greater than a first predetermined amount (SL) and a temperature (T) of the filter (13) is lower than a refreshment-allowing temperature (TR) of the filter (13); and wherein the controller (20) is **characterized by** being:
configured to perform a motoring of the engine (1) by the power-generation motor generator (2) in a case where the loaded amount (S) is equal to or greater than a second predetermined amount (Sb) which is a loaded amount smaller than the first predetermined amount (SL) and the temperature (T) of the filter (13) is equal to or higher than the refreshment-allowing temperature (TR) of the filter (13).

## Patentansprüche

1. Steuerverfahren eines Hybridfahrzeugs (100), das mit einem Verbrennungsmotor (1), einem stromerzeugenden Motorgenerator (2) und einem Fahrt-Motorgenerator (3) versehen ist, wobei das Hybridfahrzeug (100) einen Serienhybridmodus aufweist, in dem der stromerzeugende Motorgenerator (2) durch den Verbrennungsmotor (1) angetrieben wird, um elektrische Energie zu erzeugen, und der Fahrt-Motorgenerator (3) durch die elektrische Energie angetrieben wird, die durch den stromerzeugenden Motorgenerator (2) erzeugt wird, und das Hybridfahrzeug (100) einen Filter (13) aufweist, der konfiguriert ist, um einen Partikelstoff in Abgas von dem Verbrennungsmotor (1) zu sammeln, wobei das Steuerverfahren aufweist:
Schalten eines Betriebspunkts (PE) des Verbrennungsmotors (1) auf einen Betriebspunkt, bei dem eine Abgastemperatur (Tex) in einem Fall ansteigt, in dem eine geladene Menge (S) des Partikelstoffs in dem Filter (13) größer ist als eine erste vorbestimmte Menge (SL) und eine Temperatur (T) des Filters (13) niedriger ist als eine Auffrischung zulassende Temperatur (TR) des Filters (13); und
**gekennzeichnet durch**:
Durchführen eines Motorbetriebs des Verbrennungsmotors (1) durch den stromerzeugenden Motorgenerator (2) in einem Fall, in dem die geladene Menge (S) gleich oder größer ist als eine zweite vorbestimmte Menge (Sb), die eine geladene Menge ist, die kleiner als die erste vorbestimmte Menge (SL) ist, und die Temperatur (T) des Filters (13) gleich oder größer ist als die Auffrischung zulassende Temperatur (TR) des Filters (13).

2. Steuerverfahren des Hybridfahrzeugs (100) nach Anspruch 1, wobei
die erste vorbestimmte Menge (SL) eine geladene Menge ist, die einem Fall entspricht, in dem eine zulässige Temperatur (TS) des Filters (13) eine Temperatur (Tmax) gemäß einer maximalen Abgastemperatur (Tex) des Verbrennungsmotors (1) in einer Beziehung zwischen der geladenen Menge (S) und der zulässigen Temperatur (TS) des Filters (13) ist.

3. Steuerverfahren des Hybridfahrzeugs (100) nach Anspruch 1 oder 2, wobei
ein motorbetriebenes regeneratives Bremsen, bei dem ein regeneratives Bremsen durch den Fahrt-Motorgenerator (3) durchgeführt wird und ein Motorbetrieb des Verbrennungsmotors (1) durch den stromerzeugenden Motorgenerator (2) unter Verwendung der durch den Fahrt-Motorgenerator (3) regenerierten elektrischen Energie durchgeführt wird, als Motorbetrieb durchgeführt wird.

4. Steuerverfahren des Hybridfahrzeugs (100) nach Anspruch 3, ferner aufweisend
Durchführen eines motorbetriebenen regenerativen Bremsens, bei dem das regenerative Bremsen durch den Fahrt-Motorgenerator (3) durchgeführt wird und eine Batterie (6) mit der durch den Fahrt-Motorgenerator (3) regenerierten elektrischen Energie geladen wird, wobei
beim Durchführen des motorbetriebenen regenerativen Bremsens das motorbetriebene regenerative Bremsen auch in einem Fall durchgeführt wird, in dem das ladende regenerative Bremsen durchgeführt werden kann.

5. Steuerverfahren des Hybridfahrzeugs (100) nach Anspruch 3 oder 4, wobei
beim Durchführen des motorbetriebenen regenerativen Bremsens das motorbetriebene regenerative Bremsen in einem Fall durchgeführt wird, in dem zusätzlich ein Batterieladezustand (SOC), der einen Ladezustand der Batterie (6) anzeigt, größer ist als ein vorbestimmter Zustand (SOC1).

6. Steuerverfahren des Hybridfahrzeugs (100) nach einem der Ansprüche 1 bis 5, wobei
eine Betriebsbegrenzung des Verbrennungsmotors (1) basierend auf der geladenen Menge (S) durchgeführt wird, und
die Betriebsbegrenzung in einem Fall nicht durchgeführt wird, in dem die geladene Menge (S) gleich oder kleiner ist als die erste vorbestimmte Menge (SL).

7. Steuervorrichtung eines Hybridfahrzeugs (100), das mit einem Verbrennungsmotor (1), einem stromerzeugenden Motorgenerator (2) und einem Fahrt-Motorgenerator (3) versehen ist, wobei das Hybridfahrzeug (100) einen Serienhybridmodus aufweist, in dem der stromerzeugende Motorgenerator (2) durch den Verbrennungsmotor (1) angetrieben wird, um elektrische Energie zu erzeugen, und der Fahrt-Motorgenerator (3) durch die vom stromerzeugenden Motorgenerator (2) erzeugte elektrische Energie angetrieben wird, und das Hybridfahrzeug einen Filter (13) aufweist, der konfiguriert ist, um einen Partikelstoff in Abgas von dem Verbrennungsmotor (1) zu sammeln, wobei die Steuervorrichtung ein Steuergerät (20) aufweist:
das konfiguriert ist, um einen Betriebspunkt (PE) des Verbrennungsmotors (1) zu einem Betriebspunkt zu schalten, an dem eine Abgastemperatur (Tex) in einem Fall ansteigt, in dem eine geladene Menge (S) des Partikelstoffs in dem Filter größer ist als eine erste vorbestimmte Menge (SL) und eine Temperatur (T) des Filters (13) niedriger ist als eine Auffrischung zulassende Temperatur (TR) des Filters (13); und
wobei die Steuerung (20) **dadurch gekennzeichnet ist, dass** sie:
konfiguriert ist, um einen Motorbetrieb des Verbrennungsmotors (1) durch den stromerzeugenden Motorgenerator (2) in einem Fall durchzuführen, in dem die geladene Menge (S) gleich oder größer ist als eine zweite vorbestimmte Menge (Sb), die eine geladene Menge ist, die kleiner ist als die erste vorbestimmte Menge (SL), und die Temperatur (T) des Filters (13) gleich oder größer ist als die die Auffrischung zulassende Temperatur (TR) des Filters (13).

## Revendications

1. Procédé de commande d'un véhicule hybride (100) pourvu d'un moteur (1), d'un moteur-générateur de génération de puissance (2) et d'un moteur-générateur de déplacement (3), le véhicule hybride (100) ayant un mode hybride série dans lequel le moteur-générateur de génération de puissance (2) est entraîné par le moteur (1) pour générer de la puissance électrique et le moteur-générateur de déplacement (3) est entraîné par la puissance électrique générée par le moteur-générateur de génération de puissance (2), et le véhicule hybride (100) ayant un filtre (13) configuré pour collecter une matière particulaire dans le gaz d'échappement du moteur (1), le procédé de commande comprenant :
le passage d'un point de fonctionnement (PE) du moteur (1) vers un point de fonctionnement auquel une température de gaz d'échappement (Tex) augmente dans un cas où une quantité chargée (S) de la matière particulaire dans le filtre (13) est supérieure à une première quantité prédéterminée (SL) et une température (T) du filtre (13) est inférieure à une température permettant la régénération (TR) du filtre (13) ; et
**caractérisé par** :
la réalisation d'une motorisation du moteur (1) par le moteur-générateur de génération de puissance (2) dans un cas où la quantité chargée (S) est supérieure ou égale à une deuxième quantité prédéterminée (Sb) qui est une quantité chargée inférieure à la première quantité prédéterminée (SL) et la température (T) du filtre (13) est supérieure ou égale à la température permettant la régénération (TR) du filtre (13).

2. Procédé de commande du véhicule hybride (100) selon la revendication 1, dans lequel
la première quantité prédéterminée (SL) est une quantité chargée correspondant à un cas où une température admissible (TS) du filtre (13) est une température (Tmax) selon une température de gaz d'échappement maximale (Tex) du moteur (1) dans une relation entre la quantité chargée (S) et la température admissible (TS) du filtre (13).

3. Procédé de commande du véhicule hybride (100) selon la revendication 1 ou 2, dans lequel
un freinage régénératif de motorisation dans lequel un freinage régénératif est réalisé par le moteur-générateur de déplacement (3) et une motorisation du moteur (1) est réalisée par le moteur-générateur de génération de puissance (2) en utilisant la puissance électrique régénérée par le moteur-générateur de déplacement (3) est réalisé comme étant la motorisation.

4. Procédé de commande du véhicule hybride (100) selon la revendication 3, comprenant en outre
la réalisation d'un freinage régénératif de charge dans lequel le freinage régénératif est réalisé par le moteur-générateur de déplacement (3) et une batterie (6) est chargée avec la puissance électrique régénérée par le moteur-générateur de déplacement (3), où
lors de la réalisation du freinage régénératif de motorisation, le freinage régénératif de motorisation est réalisé même dans un cas où le freinage régénératif de charge peut être réalisé.

5. Procédé de commande du véhicule hybride (100) selon la revendication 3 ou 4, dans lequel
lors de de la réalisation du freinage régénératif de motorisation, le freinage régénératif de motorisation est réalisé dans un cas où, en outre, un état de charge de batterie (SOC) indiquant un état chargé de la batterie (6) est supérieur à un état prédéterminé (SOC1).

6. Procédé de commande du véhicule hybride (100) selon l'une quelconque des revendications 1 à 5, dans lequel
une limitation de fonctionnement du moteur (1) est réalisée sur la base de la quantité chargée (S), et
la limitation de fonctionnement n'est pas réalisée dans un cas où la quantité chargée (S) est inférieure ou égale à la première quantité prédéterminée (SL).

7. Dispositif de commande d'un véhicule hybride (100) pourvu d'un moteur (1), d'un moteur-générateur de génération de puissance (2) et d'un moteur-générateur de déplacement (3), le véhicule hybride (100) ayant un mode hybride série dans lequel le moteur-générateur de génération de puissance (2) est entraîné par le moteur (1) pour générer de la puissance électrique et le moteur-générateur de déplacement (3) est entraîné par la puissance électrique générée par le moteur-générateur de génération de puissance (2), et le véhicule hybride ayant un filtre (13) configuré pour collecter une matière particulaire dans le gaz d'échappement du moteur (1), le dispositif de commande comprenant un dispositif de commande (20) :
configuré pour faire passer un point de fonctionnement (PE) du moteur (1) vers un point de fonctionnement auquel une température de gaz d'échappement (Tex) augmente dans un cas où une quantité chargée (S) de la matière particulaire dans le filtre est supérieure à une première quantité prédéterminée (SL) et une température (T) du filtre (13) est inférieure à une température permettant la régénération (TR) du filtre (13) ; et où le dispositif de commande (20) est **caractérisé en ce qu'**il est :
configuré pour réaliser une motorisation du moteur (1) par le moteur-générateur de génération de puissance (2) dans un cas où la quantité chargée (S) est supérieure ou égale à une deuxième quantité prédéterminée (Sb) qui est une quantité chargée inférieure à la première quantité prédéterminée (SL) et la température (T) du filtre (13) est supérieure ou égale à la température permettant la régénération (TR) du filtre (13).
